# EUROPÄISCHE PATENTSCHRIFT

(11) **EP 1 104 720 B1**
(45) Veröffentlichungstag und Bekanntmachung des Hinweises auf die Patenterteilung: **26.11.2003**
(21) Anmeldenummer: 99123910.4
(22) Anmeldetag: 01.12.1999
(51) Int. Cl.: B60R 16/02

(54) **Verfahren und Werkzeug zur Herstellung eines Formträgerteils mit darauf fixierten Leitern und Formträgerteil**
Method and tool for producing a mould support having fixed conductors and mould support
Méthode et outillage pour produire une partie porte moule avec des conducteurs fixés et partie porte moule

(43) Veröffentlichungstag der Anmeldung: 06.06.2001
(73) Patentinhaber: Lisa Dräxlmaier GmbH, 84137 Vilsbiburg (DE)
(72) Erfinder: Bayersdorfer, Bernhard, 84171 Baierbach (DE); David, Thomas, 84175 Marklkofen/Poxau (DE); Flieser, Michael, Dr., 84144 Geisenhausen (DE); Müller, Stefan, 84036 Landshut (DE)
(74) Vertreter: HOFFMANN - EITLE

(56) Entgegenhaltungen:
- EP-A- 0 904 986
- WO-A-98/35856
- DE-A- 19 628 850
- GB-A- 2 275 373

## Beschreibung

### Technisches Gebiet

Die Erfindung betrifft ein Verfahren zum Herstellen eines Formträgerteils mit darauf fixierten Leitern sowie ein Werkzeug zur Durchführung des Verfahrens. Außerdem betrifft die Erfindung ein Formträgerteil, das durch Verpressen und Aushärten einer Kunststoffmatrix geformt ist und mit zumindest einem Leiter versehen ist.

### Stand der Technik

Heutzutage stellt sich verstärkt das Problem, Flachleitungen auf Trägerbauteilen anzubringen. Derartige Trägerbauteile sind beispielsweise Tür- oder Dachhimmelverkleidungen für Kraftfahrzeuge. In der DE 197 30 343 A1 wird hierzu vorgeschlagen, eine flexible, flache Leiterplatte mit einem Zweistufenverfahren, einem additiven Verfahren oder dergleichen einstückig dreidimensional an der Türverkleidung anzuformen. Weiterhin wird in der DE 37 40 593 C2 vorgeschlagen, Leitungen, unter anderem bandförmige Leitungen oder Folienstreifen, in einen Kunstharz-Türrahmen durch Ultraschallschweißung zu versenken, die Leitungen in Nuten einzulassen oder den Kunstharz-Türrahmen zusammen mit den Leitungen zu formen.

In den nachfolgenden Druckschriften sind verschiedene Lösungsansätze zur Befestigung von Flachleitungen beschrieben. Insbesondere betreffen diese Lösungsansätze Befestigungen von Flachleitungen an Kfz-Innenverkleidungsteilen. Aus der EP 0 826 558 A1 ist ein Anbringen eines Flachkabelbaums in einer Türverkleidung offenbart. Für den Flachkabelbaum ist in der Türverkleidung eine vorgeformte Vertiefung vorhanden. Der Flachkabelbaum wird in dieser Vertiefung aufgeklebt und mit einem aufgeklebten elastischen Schutzelement, z.B. geschäumtes Urethanharz-Material, abgedeckt, um eine Beschädigung zu vermeiden. Diese Befestigungsmöglichkeit ist mit dem Problem behaftet, dass die Türverkleidung als Trägermaterial bereits entsprechend vorbereitet sein muss und zur Befestigung und zum Schutz ein weiteres Element anzubringen ist. Damit sind aber sehr viele Arbeitsschritte notwendig, die Kosten verursachen.

In der EP 0 534 659 A2 ist die Befestigung einer Flachleitung am Türrahmen und an der Türverkleidung gezeigt. Die Befestigung erfolgt durch Aufkleben oder durch Einsetzen in eine Führungsschiene. In einer weiteren Ausführungsform ist gezeigt, dass die Flachleitung Perforationen aufweist, die in entsprechende Gummistöpsel am Trägerteil aufgedrückt werden. Wiederum sind mehrere Arbeitsvorgänge notwendig. Bei der letztgenannten Ausführungsform sind überdies eine sehr spezielle und aufwendige Ausgestaltung der Flachleitungen wie auch des Trägermaterials erforderlich.

In der DE 196 20 148 A1 ist allgemein erwähnt, dass in einem Aggregateträger einer Kraftfahrzeugtür aus faserverstärktem thermoplastischen Werkstoff ein Flachkabel zumindest streckenweise in die Wand und/oder Versteifungsrippen des Aggregateträgers eingebettet ist.

Schließlich ist in der DE 38 42 340 A1 beschrieben, dass elektrische Leiterfolien auf einer Wasserabweisfolie einer Kraftfahrzeugtür insbesondere durch Aufbügeln befestigt sind.

Andererseits ist es bekannt, Formträgerteile - etwa Türverkleidungen - in einem Formpresswerkzeug herzustellen. Dabei sind z.B. Verstärkungseinlagen bzw. Verstärkungsfasern, etwa Naturfasern aus Flachs und Sisal, in eine Kunststoffmatrix, z.B. Polyurethan, eingebunden. Ein Zuschnitt aus dem Verstärkungsmaterial und die Kunststoffmatrix werden in dem Formpresswerkzeug unter Druck und Temperatur zu dem gewünschten Formträgerteil formgepresst und ausgehärtet. Hierfür geeignete Verfahren sind bekannte Verfahren, die zur Herstellung von Faserverbundbauteilen eingesetzt werden. Insbesondere kommen die bekannten RIM-(Resin-Injection-Moulding) Verfahren und RRIM- (Reinforced Reaction-Injection-Moulding) Verfahren zum Einsatz.

Bei all diesen Flachleitungsbefestigungen stellt sich das Problem, dass die Haftung der Flachleitungen am Formträgerteil besonders sicher ausgeführt werden muss, da ansonsten ein unabsichtliches Lösen der Flachleitung während des Handlings des Formträgerteils bei der Weiterverarbeitung bzw. beim Einbau erfolgen kann. Insbesondere Verzweigungsstellen von Flachleitungen unterliegen diesem Problem, das heißt, ein Flachleitungsband verzweigt sich in zwei oder mehr Flachleiter. Auch Umlenkungspunkte eines Flachleiters auf einem Formträgerteil haben sich als ablösegefährdet herausgestellt. Darüber hinaus ist es ein Problem, Flachleitungen in gewünschter Weise auf dem Formträgerteil zu positionieren. Bisher waren hierfür sehr viele Montageschritte und Befestigungsschritte notwendig.

Es sei hier herausgestellt, dass derartige Probleme auch nicht nur bei Flachleitungen auftreten, sondern auch bei ganz normalen elektrischen Kabeln und Drähten, wie sie ansonsten im Kraftfahrzeugbau auftreten.

Allgemein ist somit festzustellen, dass beispielsweise ein Verkleben von Leiterbahnen auf einem Formträgerteil zwar in Großserie durchführbar ist, allerdings ist dies aufwendig und teuer, da noch sehr viel Handarbeit erforderlich ist.

### Darstellung der Erfindung

Das der Erfindung zugrundeliegende technische Problem besteht darin, ein einfaches und kostengünstiges Verfahren zum Anbringen von elektrischen Leitern an einem durch Pressen und Aushärten einer Kunststoffmatrix hergestellten Formträgerteil bereitzustellen. Darüber hinaus liegt der Erfindung das technische Problem zugrunde, ein einfaches und kostengünstiges Formträgerteil bereitzustellen, das bereits während dessen Herstellung mit elektrischen Leitern in einfacher und kostengünstiger Weise versehen wird, wobei gleichzeitig an besonders kritischen Stellen eine besonders sichere Verankerung der elektrischen Leiter am Formträgerteil vorgesehen ist. Schließlich besteht ein der Erfindung zugrunde liegendes technisches Problem darin, ein Werkzeug bereitzustellen, mit dem das zuvor genannte Verfahren durchführbar ist.

Diese technischen Probleme werden durch ein Verfahren mit den Merkmalen des Anspruchs 1, durch ein Formträgerteil mit den Merkmalen des Anspruchs 9 bzw. durch ein Werkzeug nach dem Anspruch 14 gelöst.

Dem erfindungsgemäßen Verfahren liegen zwei Gedanken zugrunde. Zum einen wird das Formpressverfahren, das in bekannter, üblicher Weise zur Herstellung des Formträgerteils eingesetzt wird, gleichzeitig zur Befestigung eines elektrischen Leiters an der Oberfläche des Formträgerteils genutzt. Dazu wird wenigstens ein elektrischer Leiter in den Formhohlraum eines Formpresswerkzeuges eingebracht. Dabei wird der Leiter, hier insbesondere eine Flachleitung, so im. Formhohlraum des Formpresswerkzeuges positioniert, dass er an eine Wandung des Formhohlraums angrenzt. Mit anderen Worten: Der Leiter kann direkt auf eine Wandung des Formpresswerkzeuges aufgelegt werden, z.B. auf den Pressstempel bzw. die Pressmatrize, oder der Leiter kann so in den Formhohlraum eingebracht werden, dass er nach Schließen bzw. Zusammenfahren des Formpresswerkzeuges an einer Wandung des Werkzeuges anliegt. Indem nun eine Kunststoffmatrix in den Formhohlraum eingebracht und hierin zu einem Formträgerteil verpresst und ausgehärtet wird, wird eine sehr gute Haftverbindung zwischen dem Formträgerteil und dem elektrischen Leiter geschaffen. Um an den bereits angesprochenen kritischen Stellen, wie beispielsweise den Umlenkstellen, freien Endstücken des elektrischen Leiters etc., eine sichere Haftverbindung auch beim weiteren Handling zu gewährleisten, ist darüber hinaus mindestens ein Deckelelement vorgesehen, mit dem ein oder mehrere elektrische Leiter am Formträgerteil an bestimmten Stellen fixiert werden, indem das Deckelelement durch die ausgehärtete Kunststoffmatrix am Formträgerteil fest anhaftet und dabei den Leiter mit fixiert.

Hierzu ist im Werkzeug in einer Wandung eine Vertiefung vorgesehen, in die das Deckelelement einzulegen ist. Dabei ist wesentlich, das der elektrische Leiter zwischen dem Deckelelement und dem Formträgerteil liegt, so dass der Leiter zwischen dem herzustellenden Formträgerteil und dem hiermit zu verbindenden Deckelelement zu liegen kommt. Zumindest ein Teil hiervon, d.h. der elektrische Leiter kann auch durch das Deckelelement gefädelt sein, damit ein Abschnitt hiervon geschützt ist. Die Deckelelemente schaffen dabei eine feste Haftverbindung mit größerer Fläche zwischen dem Formträgerteil und der kritischen Ablösestelle des elektrischen Leiters. Unter Umständen kann die Vertiefung unterhalb des Deckelelementes sehr groß ausgebildet sein, so dass auch größere Endstücke eines Leiters hierin untergebracht werden können. Wenn dies erforderlich ist, können damit auch bereits vormontierte Funktionsbauteile, wie beispielsweise Stecker, ganze elektrische Zusatzeinrichtungen, wie beispielsweise Steuerungen, Lampen, Schalter, Lautsprecher, etc., vor der Kunststoffmatrix geschützt untergebracht werden. Ebenso können Funktionsbauteile wie direktkontaktierte Baugruppen, d.h. Ausstiegsleuchten, Warnleuchten, Türinnenbeleuchtung, Türöffner, Türsteuergeräte, Sitzverstellschalter, usw., bereits bei der Herstellung des Formträgerteils mit integriert werden, indem sie geschützt in einer entsprechenden Vertiefung im Werkzeug untergebracht sind. Nach dem Entformen des Formträgerteils ist dann bereits die gesamte Leiterverkabelung fixiert und u.U. sogar einbaufertig, da die Funktionsbauteile, wie Stecker etc, bereits vormontiert werden konnten und nun zur Verfügung stehen.

Der der Erfindung zugrunde liegende Gedanke besteht somit darin, durch ein Deckelelement den Haftverbund an einer kritischen Stelle zu erhöhen, was durch die gegenüber der Leiteroberfläche vergrößerte Berührfläche zwischen Deckelelement und Formträgerteil erreicht wird. Unter Deckelelement ist hier jedes Bauteil zu verstehen, das einen Teil eines Leiters vollständig überbrückt und damit zum Formträgerteil eine größere Kontakt- und Verbindungsfläche schafft als dieser Leiterteil für sich allein bilden würde.

Darüber hinaus wird das Positionieren eines ganzen Leiterverbundes an einem Formträgerteil vereinfacht, da die einzelnen Deckelelemente nur in dafür vorgesehene Vertiefungen (die verschieden geformt sein können, so dass eine eindeutige Zuordnung der Deckelelemente zu den Vertiefungen möglich ist) in einer Wandung des Formhohlraums eingelegt werden müssen. Beim Einbringen der Kunststoffmatrix wird damit auch die gesamte Positionierung des oder der elektrischen Leiter beibehalten und sichergestellt. Es kann nicht zu unerwünschten Verschiebungen der Leiter kommen.

Für den Fall, dass unterhalb der Deckelelemente Funktionsbauteile und freie Endstücke der elektrischen Leiter vorhanden sind, sind diese während des Herstellungsprozesses des Formträgerteils vor der Kunststoffmatrix geschützt, da über das Deckelelement die Vertiefung mit den hierin befindlichen Funktionsbauteilen etc. abgedichtet ist.

Das Deckelteil ist vorzugsweise ein Kunststoffteil, insbesondere ein einstückiges Teil und insbesondere ein Spritzgussteil. Das Deckelteil kann z.B. aber auch zweiteilig ausgeführt sein, etwa um die beiden Deckelhälften für eine Vormontage am Leiter einfach zusammenstecken und fixieren zu können. Bei einer einteiligen Ausbildung des Deckelteils ist dieses vorzugsweise im Innenbereich der Deckelfläche mit einem Schlitz versehen, um freie Endstücke des elektrischen Leiters durch den Schlitz durchfädeln zu können. Weiterhin kann auch ein Einführschlitz vorgesehen sein, der sich vom Außenrand des Deckelteils bis in den Innenbereich erstreckt, so daß z.B. ein freies Endstück des Leiters, ggf. auch mit daran befindlichen Funktionsbauteilen, einfach durch den Einführschlitz in den geschlitzten Innenbereich des Deckelteils eingeführt werden kann. Die Schlitzbereiche des Deckelteils werden durch geeignete Maßnahmen gegen das Eindringen von Kunststoffmatrix abgedichtet, etwa durch eine formschlüssige Abdichtung von aufeinanderliegenden Dichtflächen, durch eine Labyrinthdichtung, durch Aufbringen einer Dichtmasse oder dergleichen.

Um während des Verpressvorgangs im Formpresswerkzeug den erforderlichen Gegendruck liefern zu können, für den Fall, dass die Vertiefung unter dem Deckelteil einen zusätzlichen geschützten Aufnahmeraum ausbildet, wird das Deckelteil zweckmäßigerweise entsprechend stabil gestaltet, z.B. durch eine gewölbte Ausbildung, eine entsprechende Vorspannung oder andere Versteifungsmaßnahmen.

Zusammenfassend dient also ein Deckelelement zum einen zur Vergrößerung des Haftverbundes an kritischen Stellen und zum anderen gleichzeitig zum Positionieren im Formhohlraum. Darüber hinaus kann hierdurch auch - wenn beispielsweise freie, nicht anhaftende Leiterabschnitte gewünscht sind - eine tiefergehende Aufnahmevertiefung im Werkzeug sicher abgedichtet werden. Damit ist es dann auch möglich, bereits vormontierte Funktionsbauteile und freie Endstücke der elektrischen Leiter vor der zur Herstellung des Formträgerteils notwendigen Kunststoffmatrix zu schützen.

Im fertigen, das heißt ausgehärteten Zustand der Kunststoffmatrix dient damit ein Deckelelement als Zugentlastung eines elektrischen Leiters und stellt sicher, dass dieser nicht ohne weiteres von dem Formträgerteil wieder abgerissen werden kann. Zweitens ist dadurch eine gute Abdichtung der Werkzeugvertiefung bedingt, die das Eindringen von Kunststoffmatrix oder einem Gießharz etc. verhindert. Drittens dient sie als Einlegehilfe und Positionierhilfe im Werkzeug. Hierdurch wird auch die Prozesssicherheit erhöht, weil ein falsches Einlegen durch spezielle Formgebung verhindert werden kann. Dadurch wird auch die Maßhaltigkeit beim Verpressen sichergestellt.

Erfindungsgemäß erfüllt die Kunststoffmatrix also eine Doppelfunktion. Zum einen bildet sie die Form des Formträgerteils aus, zum anderen dient sie als Haftverbindungsmittel zwischen der Formträgerteiloberfläche und dem Flachleiter sowie den Deckelelementen. Mit anderen Worten: Der Herstellungsprozess des Formträgerteils wird gleichzeitig als Verbindungsprozess zum Anbringen eines Leiters und zusätzlich eines oder mehrerer Deckelelemente auf dem Formträgerteil ausgenutzt. Somit lassen sich bei dem erfindungsgemäßen Verfahren die Leiter besonders einfach und ausreißsicher sowie kostengünstig auf dem Formträgerteil fixieren. Überraschenderweise hat sich herausgestellt, dass die in das Formpresswerkzeug eingelegten Leiter, insbesondere Flachleiter, durch den anschließenden Verpress- und Aushärtevorgang nicht beschädigt werden. Weiterhin hat sich gezeigt, dass ein guter Haftverbund zwischen Formträgerteiloberfläche und einem elektrischen Leiter erreicht wird, der an den genannten kritischen Stellen durch die Deckelemente noch erhöht wird. Flachleitungen lassen sich glatt und blasenfrei an der dreidimensional geformten Formträgerteil-Oberfläche fixieren. Unter Recycling-Gesichtspunkten können die Leiter, insbesondere die Flachleitungen, mit einer entsprechenden Abzugskraft wieder vom Formträgerteil gelöst werden. Für seinen Einsatzzweck weist jedoch der Verbund aus Formträgerteil und Leiter eine gute Haftung mit einer entsprechenden Abzugskraft auf.

Bei dem erfindungsgemäßen Verfahren kann zuerst der Leiter im Formhohlraum positioniert werden und danach die Kunststoffmatrix eingebracht werden oder umgekehrt. Beispielsweise wenn eine Verstärkungseinlage, etwa ein Naturfaserzuschnitt oder dergleichen, mit der Kunststoffmatrix getränkt ist, kann zuerst die Verstärkungseinlage mit der darin enthaltenen Kunststoffmatrix in den Formhohlraum eingebracht werden und danach der Leiter eingelegt bzw. aufgelegt werden. Es ist auch möglich, eine elektrische Leitung und Kunststoffmatrix gleichzeitig in den Formhohlraum einzubringen. Beispielsweise kann der Leiter auf einer mit der Kunststoffmatrix getränkten Verstärkungseinlage vorfixiert sein, so dass zusammen mit der Verstärkungseinlage gleichzeitig auch der Leiter und die Kunststoffmatrix in den Formhohlraum eingebracht werden.

Es ist hervorzuheben, dass unter dem Begriff Leiter jegliche elektrischen Leiter und insbesondere Flachkabel, Flachleiter, Folienflachleiter, Flachleiterkabelbäume oder Flachkabelbäume aus mehreren der vorgenannten Leitungen zu subsumieren sind, insbesondere wie sie im Kraftfahrzeugbau, Flugzeugbau oder dergleichen verwendet werden. Vorzugsweise werden erfindungsgemäß Flexible-Printed-Circuits (FPC) oder Flexible-Flat-Cables (FFC) als Flachleitungen zur Anbringung am Formträgerteil verwendet.

Als Kunststoffmatrix können Harze, wie Vynol-, Crysol-, Melamin-, Harnstoff-, Epoxid- oder ungesättigte Polyesterharze, Silikone, thermoplastische oder duroplastische Kunststoffmaterialien oder dergleichen verwendet werden. Insbesondere kann eine Polyurethanmatrix verwendet werden.

In einer günstigen Ausführungsform des erfindungsgemäßen Verfahrens wird zusätzlich ein Schichtstoff in den Formhohlraum eingelegt, insbesondere ein schichtförmiger Naturfaserzuschnitt wie z.B. aus Flachs/Sisal. Ein derartiger Schichtstoff dient als Verstärkungseinlage für das zu pressende Formträgerteil. Der Schichtstoff kann bereits mit der Kunststoffmatrix getränkt sein oder die Kunststoffmatrix kann nach dem Einlegen des Schichtstoffs in den Formhohlraum eingebracht werden. Anstelle eines Schichtstoffs können auch lose Verstärkungsmaterialien in den Formhohlraum eingebracht bzw. mit der Kunststoffmatrix vermischt werden. Als Schichtstoffmaterialien oder sonstige Verstärkungseinlagen bzw. -zusätze sind Naturfasern (z.B. Flachs, Sisal), Glasfasern, synthetische Verstärkungsfasern (z.B. Carbon), Papiere, Hartgewebe, verschiedenste Baumwollpapiere, Baumwollgewebe, Zellwollgewebe, alcalifreie Glasseiden, synthetische Gewebe, Glasseidenmatten, Asbestgewebe, Alpha-Zellulose- oder Linterspapiere oder andere geeignete Materialien einsetzbar.

Bei einem erfindungsgemäßen Formträgerteil, das durch Verpressen und Aushärten einer Kunststoffmatrix geformt ist und mit zumindest einem Leiter versehen ist, ist der zumindest eine Leiter durch die beim Formen des Formträgerteils ausgehärtete Kunststoffmatrix an der Oberfläche des Formträgerteils angeheftet und durch ein oder mehrere Deckelelemente an gewünschten Stellen zusätzlich gesichert, indem dort der Haftverbund durch die größere Oberfläche erhöht ist. In einer Ausgestaltung enthält das Formträgerteil einen Schichtstoff als Verstärkungseinlage. Der Schichtstoff kann als Zuschnitt aus Papier, Gewebe, Furnier, Vlies oder einer Matte aus Natur- und/oder Syntheseoder Glasfasern oder dgl. gebildet sein. Erfindungsgemäß ist der zumindest eine Leiter an seiner Auflagefläche durch die ausgehärtete Kunststoffmatrix des Formträgerteils auf dessen Oberfläche fixiert.

In einer Ausführungsform der Erfindung ist der zumindest eine Leiter zusätzlich an vorbestimmten Stellen mit Befestigungsstegen, die einstückig aus der Kunststoffmatrix bestehen, überspannt. Dadurch erfolgt eine zusätzliche Fixierung des Leiters durch formschlüssige Befestigungsstege. Diese Befestigungsstege sind günstig, wenn die normale Haftverbindung nicht ausreicht oder eine zusätzliche Sicherungseinrichtung gewünscht wird. Solche Befestigungsbrücken können insbesondere im Bereich zwischen zwei Deckelelementen vorteilhaft sein.

### Kurze Beschreibung der Zeichnungen

Im folgenden sind zur weiteren Erläuterung und zum besseren Verständnis mehrere Ausführungsbeispiele der Erfindung unter Bezugnahme auf die beigefügten Zeichnungen näher beschrieben. Es zeigt:
- Fig. 1: eine schematisierte Draufsicht auf ein Formträgerteil mit darauf befestigten Flachleitungen mit mehreren Deckelelementen,
- Fig. 2: eine schematische Querschnittsansicht eines Formpresswerkzeuges einer Presse mit darin einzulegenden Deckelelementen verschiedener Ausgestaltung und damit verbundenen Flachleitungen sowie einem matrixgetränkten Schichtstoff,
- Fig. 3: eine schematische Querschnittsansicht eines weiteren Formpresswerkzeuges einer Presse und ein speziell ausgestaltetes Deckelelement mit angeformten Haltern,
- Fig. 4: eine schematische Querschnittsansicht ähnlich der Fig. 3 mit einer Modifikation an dem Deckelelement,
- Fig. 5: eine Querschnittsansicht ähnlich der Fig. 3 mit noch weiter modifiziertem Deckelteil,
- Fig. 6: eine schematische Querschnittsansicht ähnlich der Fig. 3 mit einem speziellen Deckelteil zur Erhöhung der Haftverbundfläche mit dem Formträgerteil,
- Fig. 7: eine Draufsicht auf ein Deckelelement mit einem Durchgangsschlitz für einen Flachleiter und einer Haltereinrichtung für z.B. einen Stecker, und
- Fig. 8: ein anderes Deckelelement mit mehreren Schlitzen für mehrere Flachleiter.

### Darstellung verschiedener Ausführungsformen der Erfindung

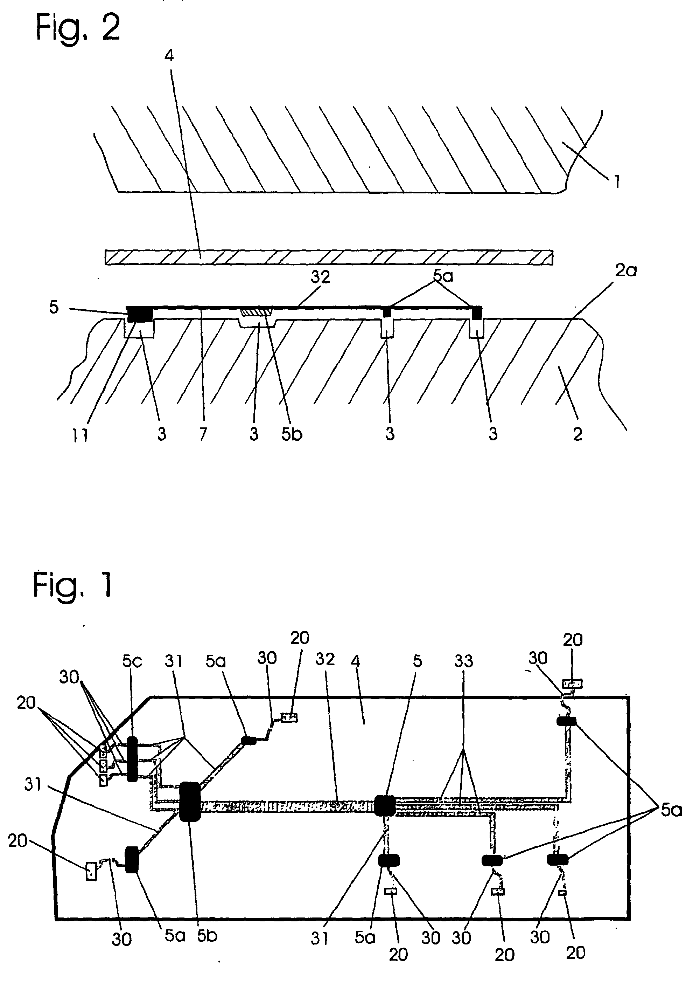

Ein erfindungsgemäßes Formträgerteil 4 mit darauf befestigten Flachleitungen 31, 32, 33 ist in schematischer Draufsicht aus der Fig. 1 ersichtlich. Das Formträgerteil 4 selbst besteht hier aus einem oder mehreren Schichtstoffen, wie beispielsweise Naturfaserzuschnitte, die in einer in einem Formpresswerkzeug ausgehärteten Kunststoffmatrix eingebettet sind. Während des Herstellungsprozesses des Formträgerteils sind hier gleichzeitig die genannten Flachleitungen 31, 32, 33 auf einer Oberfläche des Formträgerteils 4 integriert, indem diese durch die aushärtende Kunststoffmatrix gehalten sind. Hier ist eine Hauptleitung 32 vorhanden, die in einem Deckel- und Fixierteil 5 und 5b endet. Von dem Fixierteil 5 zweigen mehrere Flachleitungen 31, 33 ab, die wiederum in Fixier- und Deckelteilen 5a enden. Das gleiche ist der Fall bei dem Fixierteil 5b, von dem Einzelflachleitungen 31 sich bis zu einem Fixier- und Deckelteil 5a, 5c erstrecken. Von all diesen Fixier- und Deckelteilen 5a, 5c gehen dann nicht am Formträgerteil fixierte Flachleitungsendstücke 30 aus, an denen Stecker 20 oder andere (elektrische) Bauelemente montiert sind. Das heißt also, die Stecker 20 mit den bis zu den Deckel- und Fixierteilen 5a und 5c reichenden Flachleitungsendstücken sind frei beweglich.

Die Fixier- und Deckelteile 5, 5a, 5b und 5c sind an dem Formträgerteil 4 durch die ausgehärtete Kunststoffmatrix fest fixiert. Hierdurch wird also zum einen den verschiedenen Flachleitungen 31, 32 und 33 eine Ausreißsicherung verliehen, zum anderen werden Verteilerstützpunkte ausgebildet. Darüber hinaus sind diejenigen Deckelteile 5a und 5c, von denen aus sich freie Leitungsendstücke 30 und Stecker 20 erstrecken, so ausgebildet, dass darunter, zum Schutz vor Kunststoffmatrix beim Herstellungsvorgang des Formträgerteils 4 in einem Formpresswerkzeug, die Stecker 20 und Leitungsendstücke 30 in dafür vorgesehenen Vertiefungen liegend geschützt untergebracht sind.

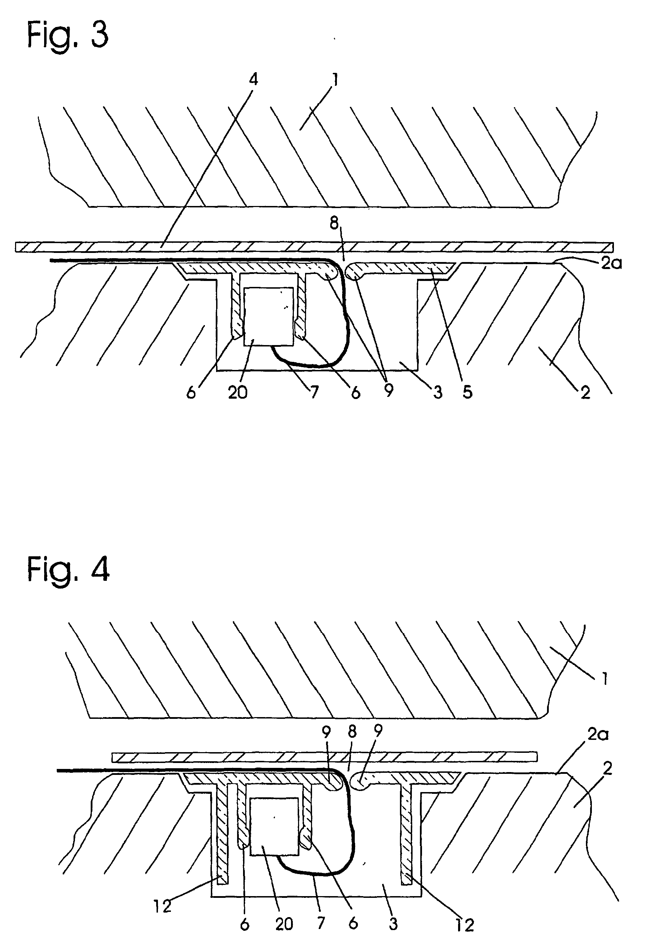

Aus der schematischen Querschnittsansicht eines Formpresswerkzeuges in Fig. 2 mit einem oberen Stempel 1 und einem unteren Stempel 2 ist die grundsätzliche Ausgestaltung des Werkzeugs erkennbar. So ist der untere Stempel 2 mit Vertiefungen 3 ausgebildet, in die verschieden große Deckelund Fixierteile 5, 5a und 5b einsetzbar sind. Diese Deckelteile sind bereits mit einer oder mehreren Flachleitungen 7 in irgendeiner Weise verbunden oder allgemein einer solchen zugeordnet, so dass im Formpresswerkzeug eine Vorfixierung der Flachleitung 7 in dem geforderten Legeschema erfolgt. Flachleitungsendstücke 30, wie unter Bezugnahme auf die Fig. 1 bereits erläutert, sind ebenfalls mit oder ohne Stecker oder anderen Bauelementen in diesen Vertiefungen aufgenommen. Dies ist insbesondere aus den weiteren Fig. 3 - 5 ersichtlich.

Nachdem die Flachleitungen 7 und Deckelteile 5, 5a, 5b auf der Wandung 2a des unteren Stempel 2 ausgelegt bzw. positioniert sind, wird das Formträger-Rohteil 4 eingelegt und in bekannter Weise nach einem der in der Beschreibungseinleitung genannten Verfahren zusammen mit dem oberen Stempel 1 zu einem Formträgerteil mit darauf befindlichen Leitungen verpresst. Alternativ können die Flachleitungen und Deckelteile aber auch an einer Wandung eines oberen Stempels positioniert und etwa durch Einclipsen oder Einstecken der Deckelteile in entsprechende Vertiefungen . im Stempel gehalten werden.

Nach dem Aushärten der Kunststoffmatrix kann das Formträgerteil 4 mit den darauf jetzt fixierten Flachleitungen 7 herausgenommen werden. Durch die Deckel- und Fixierteile 5, 5a und 5b sind die Flachleitungen bis zu diesen Teilen vor Ausreißen geschützt und fest am Formträgerteil 4 fixiert, die freien Enden wie auch die zugehörigen Stecker 20 aber nun frei zugänglich.

Die Ausgestaltung der Deckel- und Fixierteile 5 kann variieren, wie es aus den Darstellungen gemäß den Fig. 3 - 5 ersichtlich ist. Bei der in der Fig. 3 gezeigten Querschnittsansicht weist das Deckel- und Fixierteil 5 ein oder mehrere Stegpaare 6 auf, die einen Halter bilden und an einer Seite des Deckelteils vorstehen und zur Aufnahme eines Steckers 20 dienen. Die Stege 6 der Halter sind am freien Ende mit Verdickungen versehen, so dass durch elastische Verformung ein Stecker 20 zwischen einem Stegpaar 6 lösbar festgehalten wird.

Das freie Flachleitungsstück 7, an dem der Stecker 20 befestigt ist, wird durch einen Schlitz 8 im Deckelteil in die Vertiefung 3 im Stempel 2 eingeführt. Die Schlitze 8 selbst sind mit Ausrundungen 9 versehen, so dass keine scharfen Ecken oder Kanten am Schlitz 8 vorhanden sind, die zu einer Beschädigung der Flachleiter 7 führen könnten. Gleichzeitig sind die Schlitze aber auch so geformt, dass bei der Herstellung des Formträgerteils 4 keine Matrix durch den Schlitz 8 eindringen kann. Beispielsweise kann der Schlitz mit sich etwas überlappenden Schlitzflächen ausgebildet sein, so daß die Schlitzflächen durch den Pressdruck im Formpresswerkzeug formschlüssig aufeinandergedrückt werden und so den Schlitz abdichten. Die Schlitze können aber auch durch eine Labyrinthgestaltung oder dergleichen abgedichtet werden.

Bei der schematisierten Querschnittsansicht der Fig. 4 ist das Deckel- und Fixierteil 5 gegenüber der Ausführungsform der Fig. 3 zusätzlich mit weiteren Stegen 12 versehen, die bei der Abstapelung mehrerer Formträgerteile oder der weiteren Handhabung der Formträgerteile als Schutz für die noch in den Haltern 6 steckenden Stecker 20 dienen. Dazu sind die Stege 12 länger als die Stege 6 eines Halters.

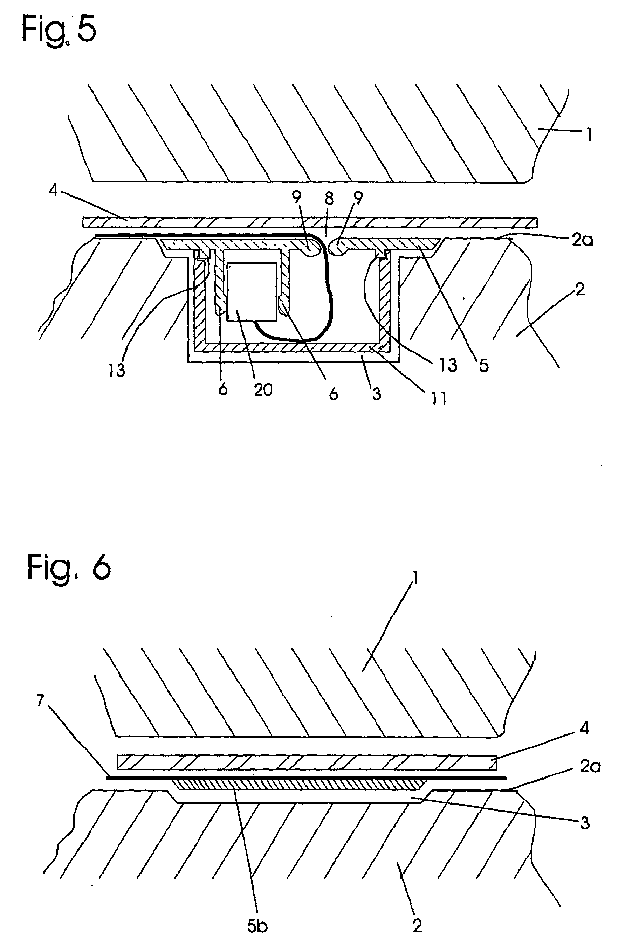

Eine weitere modifizierte Ausführungsform ist in der Fig. 5 gezeigt. Hier ist eine Schutzkappe 11 lösbar an dem Deckelteil 5 befestigbar, indem die Schutzkappe 11 mittels Formschluss auf Vorsprünge 13 am Deckelteil 5 eingreift. Damit ist eine optimale vorläufige Abdeckung für den hierin befindlichen Stecker 20 und die Flachleitung 7 gegeben. Die Schlitzausbildung 8 etc. entspricht den vorhergehenden Ausführungsformen gemäß den Fig. 3 und 4.

In der Fig. 6 ist eine schematische Querschnittsansicht eines reinen Fixierteils 5b gezeigt. Gegenüber einem Deckel- und Fixierteil, wie es in den Fig. 3-5 gezeigt ist, wird hierunter kein Leitungsendstück während der Herstellung eines Formträgerteils 4 geschützt, sondern dient nur zur Erhöhung der Ausreissfestigkeit einer Flachleitung 7. Damit weist ein solches Teil 5b auch keinen Schlitz auf. Es ist einfach ein im wesentlichen flaches Blättchen, das die zugehörige Flachleitung überbrückt. Dieses Fixierteil 5b ist nun dazu bestimmt, die Flachleitung 7 auf dem Formträgerteil 4 zu fixieren, indem die Fläche, die dem Formträgerteil 4 zugewandt ist, größer ist als die der Flachleitung 7. Damit ist eine sehr gute Haftverbindung des Fixierteils 5b am Formträgerteil 4 nach dem Aushärten der Kunststoffmatrix erzielt, so dass eine sehr gute Ausreißfestigkeit für die Flachleitung 7 gegeben ist. Wie bereits erwähnt, ist dieses Fixierteil 5b als Plättchen, Platte der dergleichen in der gewünschten Größe und Formgebung ausgebildet. Es kann insbesondere als Verteilerstützpunkt an Verzweigungsstellen der Flachleitung 7 dienen.

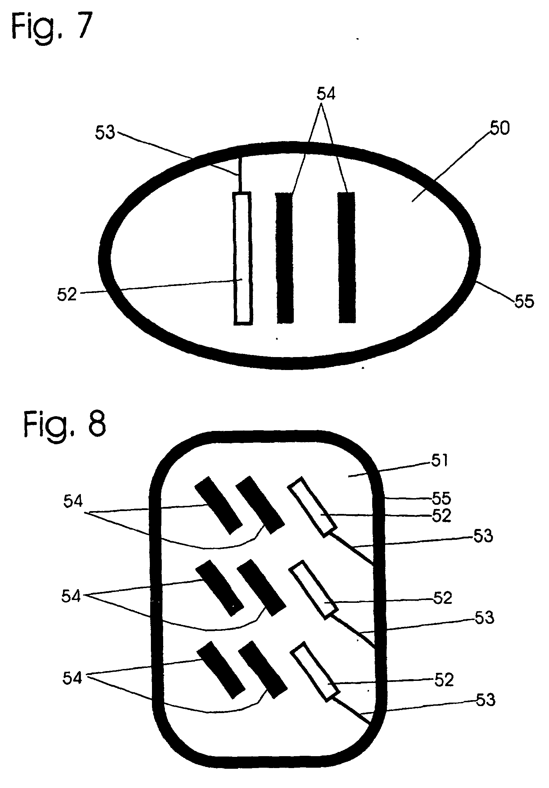

In der Fig. 7 ist eine Draufsicht eines Deckelteils 50 gezeigt, das zum einen einen Schlitz 52 aufweist, der über einen Seitenschlitz 53 bis zum Außenumfang des Deckelteils 56 geht. Durch den Schlitz 53 wird eine Flachleitung eingeführt und bleibt in dem Schlitz 52 liegen, wo durch die bereits zuvor erwähnten Abdichtungsmaßnahmen, etwa Formschluß, eine Schlitzabdichtung gegen Eindringen von Kunststoffmatrix gegeben ist. Der Einführschlitz 53 ist nicht unbedingt erforderlich, die Flachleitung kann alternativ auch direkt durch den Schlitz 52 durchgefädelt werden. Die Stege 54 dienen zur Aufnahme eines Bauelementes an dem freien Flachleitungsendstück 7, d.h. sie haben eine Ausbildung, wie die Stege 6 gemäß der Fig. 3. Das Deckel- und Fixierteil 50 weist einen Rand 55 auf, der gegenüber der restlichen Wandung leicht erhöht ist und eine gewissen Breite hat, so dass gegenüber dem Stempel 2 eine einwandfreie Dichtung erzielt wird. Das heißt, die Flachseite des Randes 55 liegt sauber auf dem Stempel 2 auf. Alternativ kann der Rand des Deckelteils z.B. auch flach abgeschrägt ausgebildet sein, um eine Dichtfläche zwischen Deckelteil und entsprechender Anlagefläche des Pressstempels zu realisieren. Die Dichtflächen werden durch den Pressdruck im Formpresswerkzeug aufeinandergedrückt. Weiterhin kann z.B. auch eine Labyrinthdichtung vorgesehen sein. Diese kann auch einen Auffangbereich für evtl. eindringende Kunststoffmatrix umfassen.

Eine abgewandelte Ausführungsform ist in der Fig. 8 gezeigt. Hier sind mehrere schräge Schlitze 52 und 53 vorhanden, denen jeweils ein Paar Haltestege 54 zugeordnet ist.

## Patentansprüche

1. Verfahren zum Herstellen eines Formträgerteils (4) mit darauf fixierten Leitern (7), bei dem
- wenigstens einem Leiter (7) ein oder mehrere Deckelelemente (5, 5a - 5c) zugeordnet werden,
- die Leiter (7) und die Deckelelemente (5, 5a - 5c) in einen Formhohlraum eines Formpresswerkzeugs (1, 2) eingelegt werden, wobei die Deckelelemente (5, 5a - 5c) in dafür vorgesehene Vertiefungen (3) in einer Wandung (2a) eines Formpresswerkzeugs (2) positioniert werden,
- eine Kunststoffmatrix in den Formhohlraum eingebracht wird und
- die Kunststoffmatrix zu einem Formträgerteil (4) verpresst und ausgehärtet wird, wobei die Kunststoffmatrix dabei eine Haftverbindung zwischen der Oberfläche des Formträgerteils (4) und dem zumindest einen Leiter (7) sowie zwischen der Oberfläche des Formträgerteils (4) und dem Deckelelement (5, 5a - 5c) herstellt.

2. Verfahren nach Anspruch 1, **dadurch gekennzeichnet, dass** sich von dem Deckelelement (5, 5a - 5c) ein freies Leitungsendstück (30) erstreckt und dieses Leitungsendstück (30) in der Vertiefung (3) des Formpresswerkzeugs (2) unter dem Deckelelement (5, 5a - 5c) geschützt untergebracht wird, bevor die Kunststoffmatrix in den Formhohlraum eingebracht wird.

3. Verfahren nach Anspruch 2, **dadurch gekennzeichnet, dass** an dem Leitungsendstück (30) ein Funktionsbauteil (20) angebracht ist und dieses Funktionsbauteil ebenfalls mit in der Vertiefung (3) des Formpresswerkzeugs (2) unter dem Deckelelement (5, 5a - 5c) geschützt untergebracht wird, bevor die Kunststoffmatrix in den Formhohlraum eingebracht wird.

4. Verfahren nach Anspruch 1, **dadurch gekennzeichnet**, das s Flexible-Printed-Circuits (FPC) oder Flexible-Flat-Cables (FFC) als Leiter (7) eingelegt werden.

5. Verfahren nach Anspruch 1, **dadurch gekennzeichnet, dass** zusätzlich ein Schichtstoff in den Formhohlraum eingelegt wird.

6. Verfahren nach Anspruch 5, **dadurch gekennzeichnet, dass** als Schichtstoff ein Naturfaserzuschnitt eingelegt wird.

7. Verfahren nach Anspruch 5 oder 6, **dadurch gekennzeichnet, dass** der Schichtstoff mit der Kunststoffmatrix getränkt ist.

8. Verfahren nach einem der Ansprüche 5 - 7, **dadurch gekennzeichnet, dass** die Kunststoffmatrix nach dem Einlegen des Schichtstoffs eingebracht wird.

9. Formträgerteil, das durch Verpressen und Aushärten einer Kunststoffmatrix geformt ist und mit zumindest einem Leiter (7) versehen ist, wobei
- ein oder mehrere der Leiter (7) mit einem oder mehreren Deckelelementen (5, 5a - 5c) versehen sind, und
- die Leiter (7) und die Deckelelemente (5, 5a - 5c) durch die beim Formen des Formträgerteils (4) ausgehärtete Kunststoffmatrix an der Oberfläche des Formträgerteils (4) anhaften.

10. Formträgerteil nach Anspruch 9, **dadurch gekennzeichnet , dass** das Formträgerteil (4) einen Schichtstoff als Verstärkungseinlage enthält.

11. Formträgerteil nach Anspruch 10, **dadurch gekennzeichnet, dass** der Schichtstoff ein Zuschnitt aus Papier, Gewebe, Furnier, Vlies oder einer Matte aus Natur- und/oder Synthese- oder Glasfasern ist und mit einer geeigneten Bindematrix, insbesondere einem Harz, getränkt oder vermischt ist.

12. Formträgerteil nach Anspruch 9, **dadurch gekennzeichnet, dass** Flexible-Printed-Circuits (FPC) oder Flexible-Flat-Cables (FFC) als Leiter (7) vorhanden sind.

13. Formträgerteil nach Anspruch 9, **dadurch gekennzeichnet, dass** als Formträgerteil (3) ein Harz getränkter Schichtstoff, insbesondere ein mit einer Polyurethan-Bindematrix getränkter Naturfaserzuschnitt verwendet ist.

14. Werkzeug zum Pressen eines eine Bindematrix enthaltenden Formträgerteils (4) und zum gleichzeitigen Fixieren von Leitern (7) an dem Formträgerteil (4), mit wenigstens einer unterhalb eines zu positionierenden Leiters (7) vorhandenen Vertiefung (3), die zur Aufnahme eines dem Leiter (7) zugeordneten Deckelelementes (5, 5a - 5c) ausgebildet ist, so dass das Deckelelement (5, 5a - 5c) lagefixiert auf dem Werkzeug positioniert ist.

15. Werkzeug nach Anspruch 14, **dadurch gekennzeichnet, dass** das Werkzeug ein Stempel (1) einer Presse ist.

16. Werkzeug nach Anspruch 14, **dadurch gekennzeichnet, dass** die Vertiefung (10) eine solche Tiefe hat, dass darin ein Leitungsendstück (30) und/oder ein Funktionsbauteil (20) vor der Kunststoffmatrix geschützt unterzubringen ist.

## Claims

1. Method for producing a moulded carrier part (4) with conductors (7) fixed thereon, in which
- one or more cover elements (5, 5a - 5c) are assigned to at least one conductor (7),
- the conductors (7) and the cover elements (5, 5a - 5c) are inserted into a mould hollow space of a compression moulding die (1, 2), the cover elements (5, 5a - 5c) being positioned in indentations (3) provided for this in a wall (2a) of a compression moulding die (2) ,
- a plastics material matrix is fed into the mould hollow space and
- the plastics material matrix is pressed and hardened to form a moulded carrier part (4), the plastics material matrix producing an adhesive connection between the surface of the moulded carrier part (4) and the at least one conductor (7) and also between the surface of the moulded carrier part (4) and the cover element (5, 5a - 5c).

2. Method according to claim 1, **characterised in that** an open line end piece (30) extends from the cover element (5, 5a - 5c) and this line end piece (30) is accommodated in the indentation (3) of the compression moulding die (2) as protected under the cover element (5, 5a - 5c) before the plastics material matrix is fed into the mould hollow space.

3. Method according to claim 2, **characterised in that** a functional component (20) is attached to the line end piece (30) and this functional component is likewise also accommodated in the indentation (3) of the compression moulding die (2) as protected under the cover element (5, 5a - 5c) before the plastics material matrix is fed into the mould hollow space.

4. Method according to claim 1, **characterised in that** flexible printed circuits (FPC) or flexible flat cables (FFC) are inserted as conductors (7).

5. Method according to claim 1, **characterised in that** a laminate is additionally inserted into the mould hollow space.

6. Method according to claim 5, **characterised in that** a natural fibre blank is inserted as laminate.

7. Method according to claim 5 or 6, **characterised in that** the laminate is impregnated with the plastics material matrix.

8. Method according to one of claims 5 to 7, **characterised in that** the plastics material matrix is fed in after the laminate has been inserted.

9. Moulded carrier part, moulded by pressing and hardening a plastics material matrix and provided with at least one conductor (7), wherein
- one or more of the conductors (7) are provided with one or more cover elements (5, 5a - 5c) and
- the conductors (7) and the cover elements (5, 5a - 5c) adhere to the surface of the moulded carrier part (4) owing to the plastics material which has hardened during moulding of the moulded carrier part (4).

10. Moulded carrier part according to claim 9, **characterised in that** the moulded carrier part (4) contains a laminate as reinforcing intermediate layer.

11. Moulded carrier part according to claim 10, **characterised in that** the laminate is a blank made of paper, woven cloth, veneer, non-woven fabric or a mat made of natural and/or synthetic or glass fibres and is impregnated or mixed with a suitable bonding matrix, in particular a resin.

12. Moulded carrier part according to claim 9, **characterised in that** flexible printed circuits (FPC) or flexible flat cables (FFC) are present as conductors (7).

13. Moulded carrier part according to claim 9, **characterised in that** a resin-impregnated laminate, in particular a natural fibre blank impregnated with a polyurethane bonding matrix, is used as moulded carrier part (3).

14. Tool for pressing a moulded carrier part (4) containing a bonding matrix and for simultaneous fixing of conductors (7) to the moulded carrier part (4), with at least one indentation (3) present beneath a conductor (7) to be positioned and constructed for accommodating a cover element (5, 5a - 5c) assigned to the conductor (7), so the cover element (5, 5a - 5c) is positioned as fixed in place on the tool.

15. Tool according to claim 14, **characterised in that** the tool is a male mould (1) of a press.

16. Tool according to claim 14, **characterised in that** the indentation (10) has a depth such that a line end piece (30) and/or a functional component (20) can be accommodated therein as protected from the plastics material matrix.

## Revendications

1. Procédé de fabrication d'une partie porte moule (4) avec des conducteurs (7) fixés sur elle, dans lequel
- un ou plusieurs éléments formant couvercle (5, 5a à 5c) sont associés à au moins un conducteur (7),
- les conducteurs (7) et les éléments formant couvercle (5, 5a à 5c) sont introduits dans un espace creux de moule d'un outil de pressage de moule (1, 2), les éléments formant couvercle (5, 5a à 5c) étant positionnés dans des cavités (3) prévues à cette fin, ménagées dans une paroi (2a) d'un outil de pressage de moule (2),
- une matrice de matière synthétique est introduite dans l'espace creux de moule, et
- la matrice de matière synthétique est pressée pour former une partie porte moule (4) et est durcie, la matière de matière synthétique produit alors une liaison par adhésion entre la surface de la partie porte moule (4) et le au moins un conducteur (7), ainsi qu'entre la surface de la partie porte moule (4) et l'élément formant couvercle (5, 5a à 5c) .

2. Procédé selon la revendication 1, **caractérisé en ce que**, de l'élément formant couvercle (5, 5a à 5c), s'étend une pièce d'extrémité conductrice (30) libre et cette pièce d'extrémité conductrice (30) est logée de façon protégée dans la cavité (3) de l'outil de pressage de moule (2), sous l'élément formant couvercle (5, 5a à 5c), avant que la matrice de matière synthétique soit introduite dans l'espace creux de moule.

3. Procédé selon la revendication 2, **caractérisé en ce que**, sur la pièce d'extrémité conductrice (30), est monté un composant fonctionnel (20) et ce composant fonctionnel est également logé de façon protégée dans la cavité (3) de l'outil de pressage de moule (2), sous l'élément formant couvercle (5, 5a à 5c), avant que la matrice de matière synthétique soit introduite dans l'espace creux de moule.

4. Procédé selon la revendication 1, **caractérisé en ce que** des circuits imprimés flexibles (FPC) ou des câbles plats flexibles (FFC) sont introduits en tant que conducteurs (7) .

5. Procédé selon la revendication 1, **caractérisé en ce que**, en plus, on introduit un matériau en couche dans l'espace creux de moule.

6. Procédé selon la revendication 5, **caractérisé en ce qu'**on introduit un flan en fibres naturelles en tant que matériau en couche.

7. Procédé selon la revendication 5 ou 6, **caractérisé en ce que** le matériau en couche est imbibé avec la matrice de matière synthétique.

8. Procédé selon l'une des revendications 5 à 7, **caractérisé en ce que** la matrice en matière synthétique est introduite après insertion du matériau en couche.

9. Partie porte moule, formée par pressage et durcissement d'une matrice en matière synthétique et munie d'au moins un conducteur (7), où
- un ou plusieurs des conducteurs (7) sont munis d'un ou plusieurs éléments formant couvercle (5, 5a à 5c), et
- les conducteurs (5) et les éléments formant couvercle (5, 5a à 5c), du fait de la matrice en matière synthétique, ayant été durcie lors du moulage de la partie porte moule (4), adhèrent à la surface de la partie porte moule (4).

10. Partie porte moule selon la revendication 9, **caractérisé en ce que** la partie porte moule (4) contient un matériau en couche se présentant sous forme d'insert de renforcement.

11. Partie porte moule selon la revendication 10, **caractérisée en ce que** le matériau en couche est un flan de papier, textile, doublure, nappe de fibres ou un matelas de fibres naturelles et/ou de synthèse ou de verre, et est imbibé ou mélangé avec une matrice de liant appropriée, en particulier une résine.

12. Partie porte moule selon la revendication 9, **caractérisée en ce que** des circuits imprimés flexibles (FPC) ou des câbles plats flexibles (FFC) sont prévus en tant que conducteurs (7).

13. Partie porte moule selon la revendication 9, **caractérisée en ce que** l'on utilise comme partie porte moule (3) un matériau en couche imbibé de résine, en particulier un flan de fibres naturelles, imbibé d'une matrice de liant en polyuréthane.

14. Outil pour le pressage d'une partie porte moule (4), contenant une matrice de liant, et de fixation simultanée de conducteurs (7) sur la partie porte moule (4), avec au moins une cavité (3) prévue au-dessous d'un conducteur (7) à positionner, cavité réalisée de façon à loger un élément formant couvercle (5, 5a à 5c), associé au conducteur (7), de sorte que l'élément formant couvercle (5, 5a à 5c) soit positionné sur l'outil, en étant fixé en position.

15. Outil selon la revendication 14, **caractérisé en ce que** l'outil est un poinçon (1) d'une presse.

16. Outil selon la revendication 14, **caractérisé en ce que** la cavité (10) est d'une profondeur telle qu'on peut y loger de façon protégée une pièce d'extrémité conductrice (30) et/ou un composant fonctionnel (20), avant la matrice en matière synthétique.
